# EUROPEAN PATENT APPLICATION

(11) **EP 4 684 945 A1**
(43) Date of publication of application: **28.01.2026**
(21) Application number: 25190538.6
(22) Date of filing: 18.07.2025
(51) Int. Cl.: B29C 65/60, B29C 65/78, B21D 39/04, B29L 31/36, H01R 43/048

(54) **TOOLING TO CRIMP/FORM ON TOP AND BOTTOM WITH ONE INPUT MOTION**

(30) Priority: 22.07.2024 US 202418779650
(71) Applicant: TE Connectivity Solutions GmbH, 8200 Schaffhausen (CH)
(72) Inventor: COLLEGE, David Alan, MIDDLETOWN, 17057 (US)
(74) Representative: Ashton, Gareth Mark

(57) **Abstract**

A crimping system (400) comprises first and second tool assemblies (420, 440). The first tool assembly (420) includes a first tool holder (422) movable in a crimping direction, a first crimping anvil (426) mounted thereto and adapted to contact a first crimping feature (110) of an object to be crimped, and a first support (424) movably mounted to the first tool holder (422). The first support (424) is arranged to apply a force on a first side of the object for maintaining its position during crimping. The second tool assembly (440) includes a second crimping anvil (444) adapted to contact a second crimping feature (110) of the object, and a second support (446) movably mounted relative to the second crimping anvil (444). The second support (446) is arranged to apply a force on a second side of the object for maintaining its position during crimping. Thereby, the object is prevented from rotating during crimping.

## Description

The present disclosure relates to a system and method for crimping and/or forming a top and a bottom of an element or assembly (e.g., a housing or shield of an electrical connector or electrical assembly) using a single input motion.

Crimping is a common operation performed during, for example, the connectorization or termination of cables or wires. Crimping may be performed on components such as conductive terminals, shielding and other housings, ferrules and the like. Some components require the application of asymmetric crimping forces (e.g., crimping forces applied on only one of two lateral sides of a component being crimped). Theses uneven forces can result in rotational forces being imparted on the component. These forces can lead to mispositioning of the component during crimping, and/or reduce the reliability and repeatability of the crimping process.

Accordingly, improved systems are desired which, for example, more adequately support components during crimping operations, including asymmetric crimping operations.

In one embodiment of the present disclosure, a crimping system comprises a first tool assembly and a second tool assembly. The first tool assembly includes a first tool holder movable in a crimping direction, a first crimping anvil mounted to the first tool holder and adapted to contact a first crimping feature of an object to be crimped, and a first support movably mounted to the first tool holder. The first support is adapted to apply a predetermined force on a first side of the object to be crimped for maintaining a position of the object during crimping. The second tool assembly includes a second crimping anvil adapted to contact a second crimping feature of the object, and a second support movably mounted relative to the second crimping anvil. The second support is adapted to apply a predetermined force on a second side of the object to be crimped for maintaining the position of the object during crimping. The crimping system may comprise an actuator selectively biasing the first tool assembly in a direction toward the second tool assembly.

The invention will now be described by way of example with reference to the accompanying Figures, of which:
Figure 1A is a perspective view of an assembly in an unassembled state useful for describing embodiments of the present disclosure;
Figure 1B is a perspective view of the assembly of Figure 1A in a partially assembled state;
Figure 2 is a cross-sectional view of the assembly of Figure 1B illustrating the crimping and forming operations to be performed thereon by embodiments of the present disclosure;
Figure 3 is a cross-section of a portion of the assembly of Figure 2 after a crimping operation has been performed thereon;
Figure 4 is a cross-sectional view of a crimping and forming system used to perform the crimping and forming operations on the assembly of the preceding figures in a first or initial position;
Figure 5 is a cross-sectional view of the crimping and forming system of Figure 4 in a first intermediate step or position of the crimping and forming operations;
Figure 6 is a cross-sectional view of the crimping and forming system of Figures 4 and 5 in another intermediate step or position of the crimping and forming operations;
Figure 7 is a cross-sectional view of the crimping and forming system of Figures 4-6 in yet another intermediate step or position of the crimping and forming operations;
Figure 8A is a cross-sectional view of the crimping and forming system of Figures 4-6 in a final step or position of the crimping and forming operations; and
Figure 8B is a detailed view of the assembly as shown in Figure 8A.

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

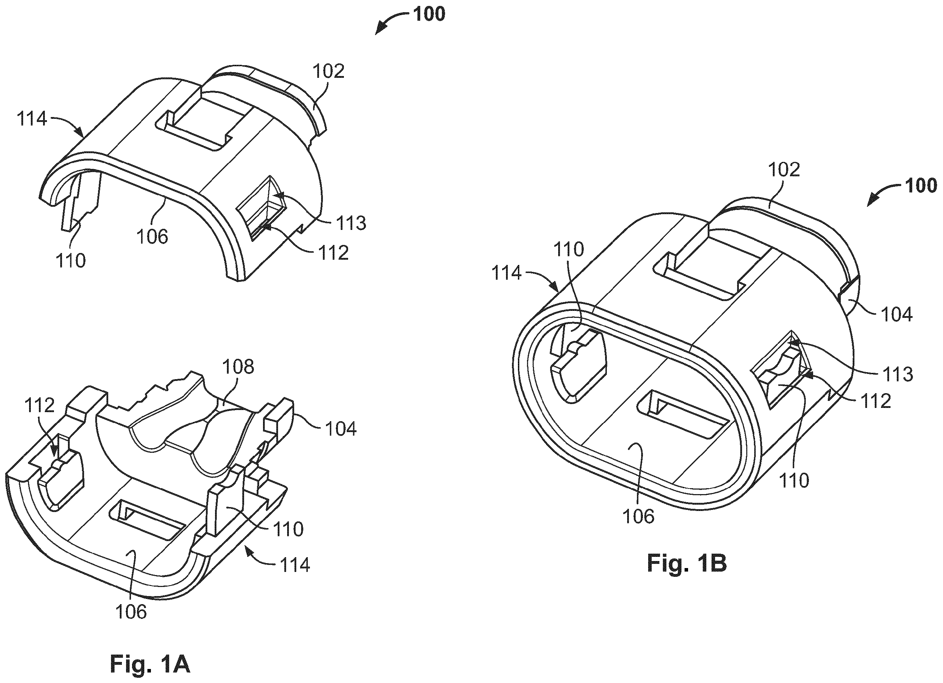

Embodiments of the present disclosure will be described in the context of an exemplary housing or housing assembly 100. The housing 100 may be, for example, a connector housing, shielding shell, ferrule or the like, and comprises first and second halves 102, 104. In the exemplary embodiment, the housing halves 102, 104 are identical, however, embodiments of the present disclosure may also include assembly that are not identical without departing from the scope of the present disclosure. Figure 1A shows the housing 100 in a disassembled state, prior to the joining of the first and second halves 102, 104. Figure 1B illustrates the housing 100 in a partially assembled state, wherein the first and second halves 102, 104 have been joined together, but have not been fixedly attached to one another (e.g., via crimping). Each housing halve 102, 104 defines an interior space 106, a wire guide portion 108, a deformable tab 110, an opening 112 in communication with a tab notch 113 sized and located to receive the tab of the opposite mated halve, and a support notch 114 arranged generally opposite the tab 110.

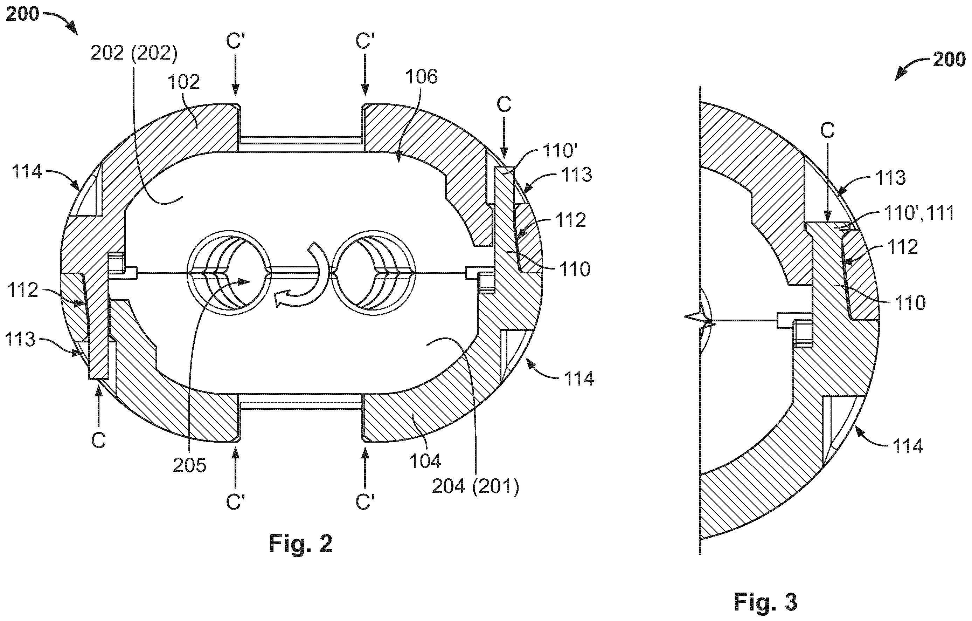

With reference to Figure 2, an assembly 200 includes the housing 100 having an inner part 201 arranged with the interior space 106. In one embodiment, the inner part 201 is integrally formed with respective halves 102, 104 of the housing 100. In other embodiments, the inner part 201 may be embodied as a separate insert (e.g., an insulator or cable separation device). Specifically, in one embodiment, the inner part 201 comprises a first halve 202 and a second halve 204 (e.g., identical to the first halve) adapted to be joined together to define, for example, conductor openings 205 therethrough. In order to secure the inner part 201 together, free ends of the tabs 110 of each housing halve 102, 104 must be crimped at indicated locations via crimping forces C.

Further, as the as the inner part 201 or the housing 100 may create some elastic resistance to the complete mating of the halves 102, 104, opposing clamping forces C' must also be placed onto each of the housing halves 102, 104 in the indicated directions and at the indicated locations. The asymmetric nature of the crimping forces C, a rotational moment in the indicated clockwise direction is placed on the assembly 100. This resulting force must be accounted for in order to maintain the assembly 200 in its proper position and/or reliably perform the necessarily crimping and/or clamping operations thereon.

Figure 3 illustrates a portion of the assembly 200 after the crimping operation has been performed. As shown, a free end 110' of the tab 110 has been deformed via crimping, creating a flattened head 111 having at least one dimension greater than a corresponding dimension of the opening 112 through which a remainder of the tab 110 is arranged. This fixes the first and second halves 102, 104 together, and maintains the applied clamping force on the inner part 201.

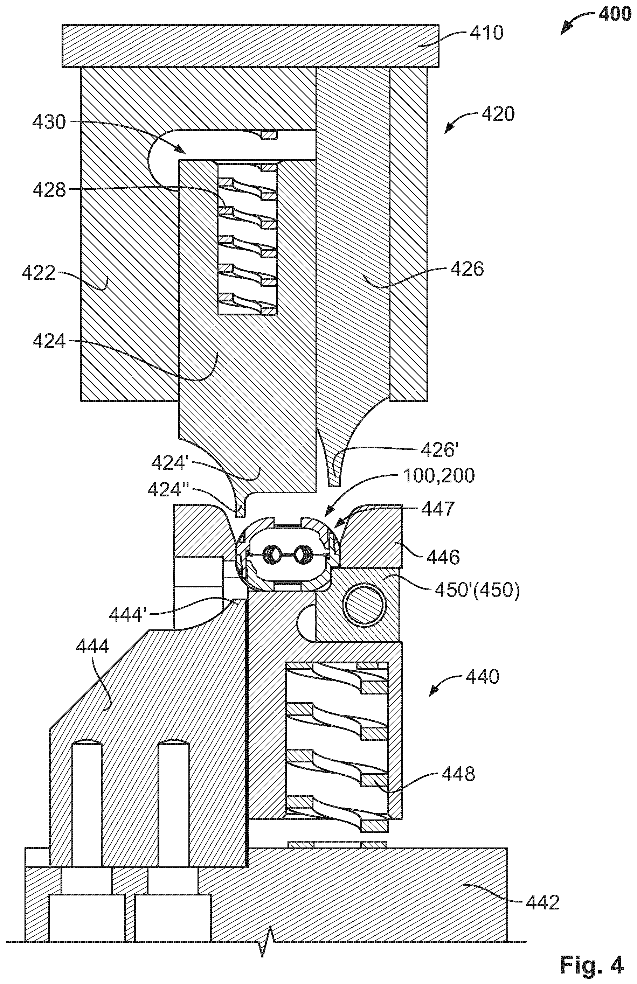

Referring to Figure 4, a system or crimp tooling assembly 400 for performing the above-described crimping and clamping operations is shown. The system 400 includes a first or upper tool assembly 420 and a second or lower tool assembly 440. The upper tool assembly 420 includes a tool holder 422, an upper support member 424 movably held by and/or in the tool holder, and an upper anvil 426 held by or fixed to the tool holder.

The upper support member 424 is movably mounted to and/or in the tool holder 422. Specifically, the upper support member 424 is slidable relative to the tool holder 422 in vertical directions, and is elastically mounted thereto via an upper elastic element or spring 428. In one embodiment, the spring 428 is a compression spring adapted to bias the upper support member 424 in the downward vertical direction away from the upper tool holder 422. The compression spring 428 creates a gap 430 between an upper end or top surface of the upper support member 424 and a downward facing opposing surface of the tool holder 422.

A downward facing, generally planar surface 424' of the upper supper member 424 is adapted to engage with a top of the housing 100 for delivering the clamping force C' thereon. The upper support member 424 further includes a downwardly protruding anvil surface 424° adapted to support the crimping of the tab 110 by the lower tool assembly. The upper anvil 426 includes a downwardly protruding anvil or crimping surface or tip 426' adapted to engage with the free end 110' of the upwardly extending tab 110 of the lower housing halve 104.

The upper tool holder 422 may be selectively translated in upward and downward vertical directions via an upper actuator 410, the details of which have been omitted herein for the purposes of brevity. As would be understood by one of ordinary skill in the art, the upper actuator 410 may comprise any suitable form of linear actuator (e.g., a pneumatic, hydraulic or electric linear actuator) capable of translating the upper tool holder 422 for performing the processing steps described herein. The actuator 410 may be under manual control, or may be controlled via automated means (e.g., via one or more associated control systems).

The lower tool assembly 440 includes a base plate 442 onto which a fixed lower anvil 444 having a crimping surface or anvil tip 444' is supported and/or attached. The lower tool assembly further includes a lower support, support member, or nest 446 defining a recess 447 into which the housing 100 or assembly 200 is arranged. The nest 446 is movably supported on the lower anvil 444 and/or the base plate 442 and guided for movement in the vertical directions. In the exemplary embodiment, the nest 446 is elastically supported on an elastic member 448, such as another compression spring, which biases the nest in an upward vertical direction away from the base plate 442. In one embodiment, the upper compression spring 428 and the lower compression spring 448 have the same spring rate for equalizing the clamping forces C' placed on the housing halves 102, 204.

The lower tool assembly 440 further includes a lower support anvil 450 adapted to support the second housing halve 104. Specifically, the lower support anvil 450 defines a top surface 450' opposing the protruding upper anvil surface 426' in the vertical direction. A portion or edge of the top surface 450' is adapted to be received in the support notch 114 (see Figures 2 and 3) of the lower housing halve 104.

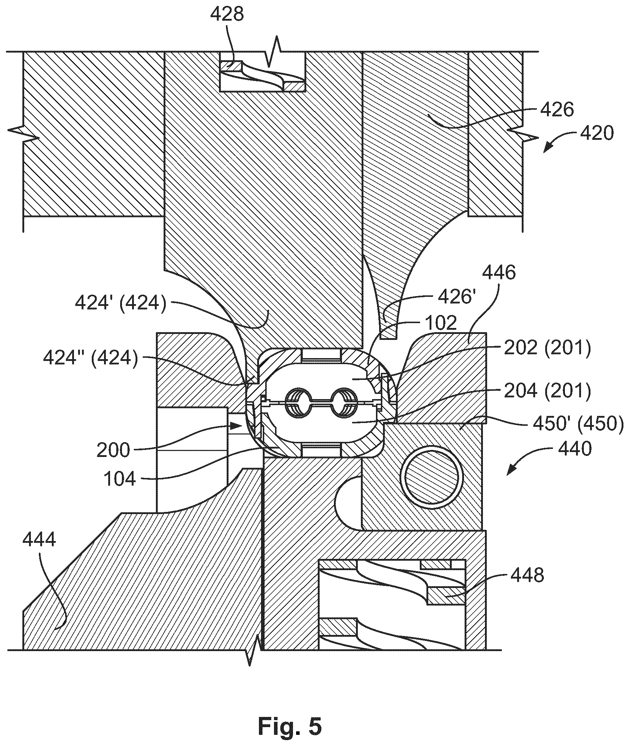

A crimping or forming operation according to an embodiment of the present disclosure will be described in reference to Figures 5-8B, utilizing the system described above with respect to Figure 4.

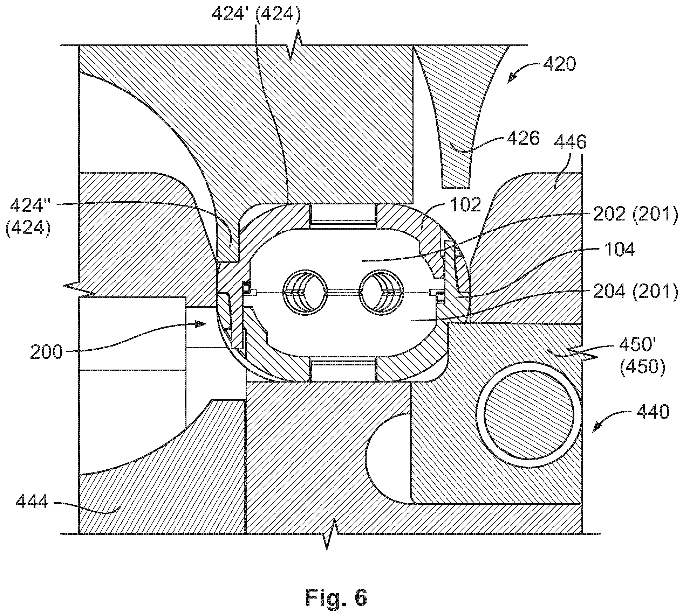

As shown in Figure 5, as the upper tool assembly 420 is moved downward, the planar surface 424' of the upper support member 424 engages with a top of the housing 100, and specifically the halve 102, for delivering a clamping force C' thereon. Initially, the inner part halves 202, 204 may not be seated or joined together (i.e., the illustrated gap remains therebetween), as illustrated. This may be the result of internal elastic stresses or forces acting thereon via the components of the assembly 200. With reference to Figures 5 and 6, continued downward translation of the upper tool assembly 420 toward the lower tool assembly 440 builds the clamping force C' on the assembly 200 between the nest 426 and the upper support member 424. It should be understood that this clamping force C' is dictated by the predetermined spring rates or elastic characteristics of the upper and lower compression springs or elastic elements 428, 448. The clamping force C' is operative to bias the inner part halves 202, 204 into abutting contact with one another, eliminating the gap therebetween to form the inner part 201.

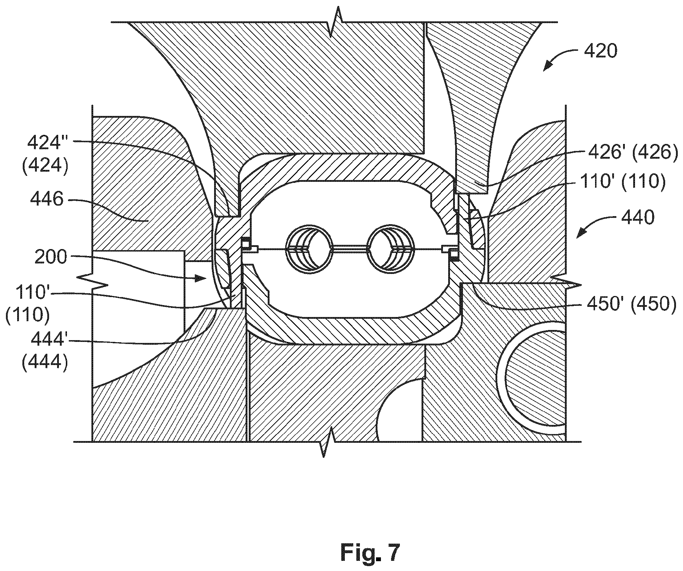

With reference to Figure 7, continued translation of the upper tool assembly 420 relative to the lower tool assembly 440 in the downward direction engages the anvil tips or surfaces 426', 444' of the anvils 426, 444 with respective ones of the free ends 110' of the tabs 110 of each halve 102, 104. Clamping forces C' on the assembly 200 continue to build as the upper tool holder 422 moves downward and the springs 428, 448 are further compressed. This clamping force C' on the assembly 200 prevents its rotation (i.e., the rotation of the housing halves 102, 104 of the housing 100 and the inner part halves 202, 204 of the inner part 201) due to the uneven crimping force C applied on each of the free ends 110' of the tabs 110 via the anvils 426, 444.

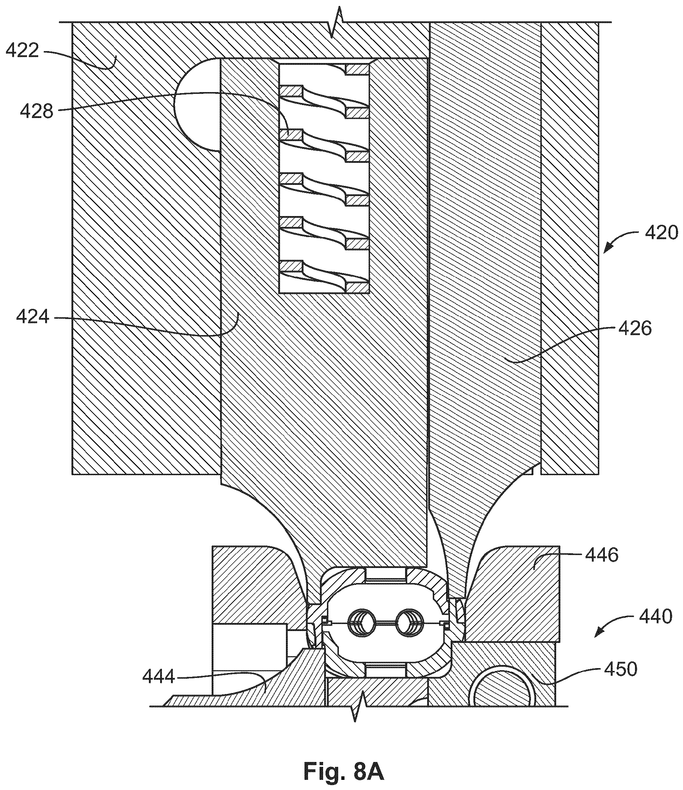

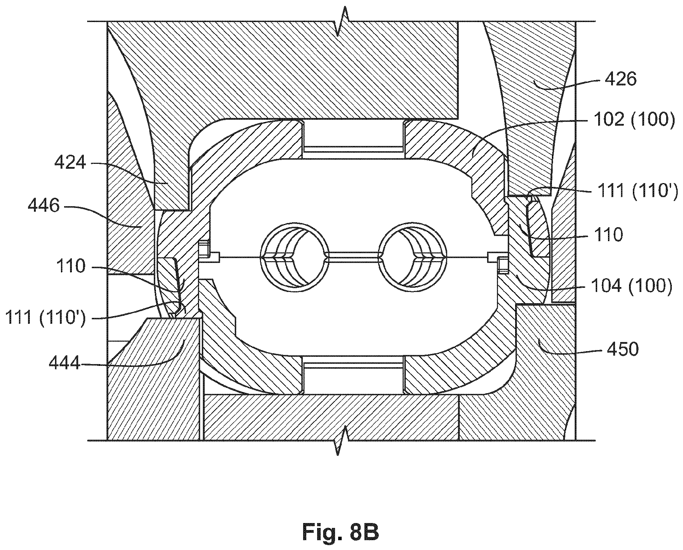

With reference to Figures 8A and 8B, crimping of the free ends 110' of the tabs 110 to form the expanded heads 111 begins as the clamping force C' builds via the springs 428, 448. Crimping is completed to a fixed dimension after the spring loaded upper support member 424 and nest 446 bottom out against respective ones of the upper tool holder 422 and the base 442. As shown, the lower anvil 444 and the upper anvil 426 engage within respective ones of the notches 113, and the upper tool support 424 and the lower tool support 450 engages with respective ones of the notches 114. The upper tool support 424 and the lower tool support 450 oppose the respective anvils 444, 426 to aid in the deformation of the free ends 110' of the tabs 110 under compression during crimping. Closing the upper and lower tooling or tool assemblies 420, 440 in these hard positions causes material of the tabs 110 to flow to form the retaining or expanded heads 111, securing the housing halves 102, 204 and the inner part halves 202, 204 together.

Further embodiments falling within the scope of the appended claims will also be apparent to the skilled person.

## Claims

1. A crimping system (400), comprising:
a first tool assembly (420), including:
a first tool holder (422) movable in a crimping direction;
a first crimping anvil (426) mounted to the first tool holder (422) and adapted to contact a first crimping feature of an object to be crimped; and
a first support (424) movably mounted to the first tool holder (422) and adapted to apply a predetermined force on a first side of the object to be crimped for maintaining a position of the object during crimping; and
a second tool assembly (440), including:
a second crimping anvil (444) adapted to contact a second crimping feature of the object to be crimped; and
a second support (446) movably mounted relative to the second crimping anvil (444) and adapted to apply a predetermined force on a second side of the object to be crimped for maintaining the position of the object during crimping.

2. The system (400) of claim 1, wherein the second tool assembly (440) further comprises a fixed base (442), wherein the second crimping anvil (444) is fixedly mounted to the base (442) and the second support (446) is movably mounted to at least one of the second crimping anvil (444) or the base (442).

3. The system (400) of claim 1 or 2, wherein the second tool assembly (440) further comprises a support anvil (450), the second support (446) optionally including an opening receiving the support anvil (450).

4. The system (400) of claim 3, wherein the support anvil (450) defines a support surface opposing a crimping surface of the first crimping anvil (426) in the crimping direction.

5. The system (400) of any preceding claim, wherein the first support (424) is elastically mounted to the first tool holder (422), the first support (424) elastically biased in the crimping direction away from the first tool holder (422).

6. The system (400) of any preceding claim, wherein the second support is elastically mounted to at least one of the base (442) or the second crimping anvil.

7. The system (400) of any preceding claim, wherein the second support (446) defines a recess (447) adapted to receive and hold the object to be crimped.

8. The system (400) of any preceding claim, wherein a crimping surface of the second crimping anvil (444) opposes an anvil surface of the first support (424) in the crimping direction.

9. The system (400) of any preceding claim, wherein the first tool assembly (420) further includes a first spring (428) elastically biasing the first support in a direction away from the first tool holder (422), wherein the first spring (428) is optionally arranged between the first tool holder (422) and the first support (424).

10. The system (400) of claim 9, wherein the first support (424) is biased against an elastic force of the first spring (428) in a direction opposite the crimping direction as the first tool holder (422) is moved in the crimping direction and the first support (424) contacts the object to be crimped.

11. The system (400) of any preceding claim, wherein the second tool assembly (440) further includes a second spring (428) elastically biasing the second support (446) in a direction toward the first tool assembly (420), wherein the second spring (428) is optionally arranged between a base (442) of the second tool assembly (440) and the second support (446).

12. The system (400) of claim 11, wherein the second support (446) is biased against an elastic force of the second spring (428) in the crimping direction as the first tool holder (422) is moved in the crimping direction and the first support (424) contacts an object to be crimped.

13. The system (400) of any one of claims 11 and 12, when claim 11 is appended to any one of claims 9 and 10, wherein a spring (428) rate of the first spring (428) is equal to a spring (428) rate of the second spring (428).

14. The system (400) of any preceding claim, wherein the first tool holder (422) is movable from an initial position to a crimped position in the direction of crimping, wherein in an intermediate position of the first tool holder (422) the first support and the second support are adapted to apply a clamping force on the first and second sides of the object to be crimped.

15. The system (400) of claim 13 or the system (400) of any one of claims 11 and 12 when claim 11 is appended to any one of claims 9 and 10, wherein the first tool holder (422) is movable from an initial position to a crimped position in the direction of crimping, wherein in the crimped position:
the first support (424) is biased into contact with the first tool holder (422) against the elastic return force of the first spring (428); and
the second support (446) is biased into contact with at least one of the base (442) or the second crimping anvil (444) against the elastic return force of the second spring (428).
